# EUROPEAN PATENT APPLICATION

(11) **EP 4 769 582 A1**
(43) Date of publication of application: **01.07.2026**
(21) Application number: 24307307.9
(22) Date of filing: 26.12.2024
(51) Int. Cl.: H01M 8/04029, B60L 50/72, H01M 8/04791, H01M 8/2475, H01M 8/04014, H01M 8/10

(54) **FUEL CELL SYSTEM AND VEHICLE COMPRISING SUCH FUEL CELL SYSTEM**

(71) Applicant: ALSTOM Transport SA, 93400 St-Ouen sur Seine (FR)
(72) Inventor: D'ARBIGNY, Julien, 65000 Tarbes (FR); AUDEMAR, Christophe, 65310 Horgues (FR); SOUSSENS, Marion, 65360 Arcizac-Adour (FR)
(74) Representative: Plasseraud IP

(57) **Abstract**

The invention relates to a fuel cell system (10), comprising:
- at least one fuel cell stack (12) adapted to produce electrical energy from at least one flow (180) of dihydrogen and a flow (200) of air, the or each fuel cell stack comprising a plurality of cells (22);
- an enclosure (14) defining an inner space (34), in which the or each fuel cell stack is arranged, the enclosure comprising at least a ventilation inlet (40) and a ventilation outlet (42) for the ventilation of the inner space;
- a thermal circuit (16) comprising a heat exchanger (50) adapted to cool the or each fuel cell stack and comprising at least a ventilation system (52) configured to create an airflow through the heat exchanger.

The ventilation system is adapted to send at least part of said airflow into the inner space through the ventilation inlet.

## Description

The present invention relates to a fuel cell system, in particular destined to equip a vehicle. The present invention also relates to such vehicle and to a method for operating such system.

The invention is, as an example, applied in a rail vehicle using on-board hydrogen fuel as a source of energy to power traction motors, or auxiliaries, or both.

In the context of powering rail vehicles, it is known to equip said vehicles with fuel cell type systems. Conventionally, a fuel cell comprises at least one electrochemical cell, and preferably a stack formed by a plurality of superimposed electrochemical cells, each electrochemical cell being configured to carry out the oxidation-reduction reaction between a stream of dihydrogen and the dioxygen in a stream of air

Fuel cell stacks are conventionally accommodated in an enclosure protecting them against external influences, such as ingress of water and/or objects falling on them.

However, fuel cells release hydrogen, which may lead to an explosive and/or flammable atmosphere inside the enclosure. Hydrogen releases are for example due to the natural hydrogen permeation of the polymer gaskets used for ensuring the hydrogen tightness of the cells (this is called "continuous grade of release") or to component failure, such as gasket break (this is called "secondary grade of release").

Attempts to avoid this phenomenon are based on flushing the enclosure continuously with fresh air fed into the enclosure to limit the hydrogen concentration therein.

For example, in prior art, a portion of the air flow generated by the air compressor used to generate the air flow to provide oxygen to the fuel cell stack is diverted into the enclosure and is used to ventilate inside the enclosure.

However, such system has a negative impact on the overall efficiency of the fuel cell system, by leading to an electrical overconsumption of the compressor.

An aim of the invention is to provide a fuel cell system with an improved efficiency, and thus to improve hydrogen consumption of the equipment comprising such system.

To this end, the invention relates to a fuel cell system, comprising:
- at least one fuel cell stack adapted to produce electrical energy from at least one flow of dihydrogen and a flow of air, the or each fuel cell stack comprising a plurality of cells ;
- an enclosure defining an inner space, in which the or each fuel cell stack is arranged, the enclosure comprising at least a ventilation inlet and a ventilation outlet for the ventilation of the inner space ;
- a thermal circuit comprising a heat exchanger adapted to cool the or each fuel cell stack and comprising at least a ventilation system configured to create an airflow through the heat exchanger,
wherein the ventilation system is adapted to send at least part of said airflow into the inner space through the ventilation inlet.

At least part of the airflow used in the heat exchanger is thus also used to ventilate the inner space of the enclosure, to prevent build-up of dihydrogen in said enclosure. The system according to the invention thus allows a more efficient ventilation of the enclosure, by preventing a loss of compressor efficiency.

According to preferred embodiments, the invention may comprise one or more of the following features, taken alone or in any technically possible combination:
- the or each cell is an ion polymer electrolyte fuel cell, preferably a proton exchange membrane fuel cell;
- the enclosure is made of a metallic material, preferably of aluminum, aluminum alloy and/or stainless steel;
- the ventilation system is configured to send at least part of the airflow into the inner space through the ventilation inlet at a rate so that a volume concentration of H2 into said inner space is maintained to less than a lower flammability limit of dihydrogen;
- the ventilation inlet and the ventilation outlet are arranged on walls of the enclosure on either side of the inner space;
- the heat exchanger is a radiator comprising a tube bundle for circulating a heat transfer fluid;
- the fuel cell system further comprises an air compressor configured to inject the flow of air into the fuel cell stack.

According to another aspect, the invention also relates to a vehicle, for example a railway vehicle, comprising a fuel cell system of the above-mentioned type, the fuel cell system being configured to provide electrical energy to at least an equipment of the vehicle.

According to another aspect, the vehicle comprises at least one electric traction motor for propelling the vehicle, the fuel cell system being configured to provide electrical energy to said motor.

The invention will be better understood and other advantages thereof will appear more clearly upon reading the following description, provided solely as a non-limitative example and made in reference to the appended drawing, in which:

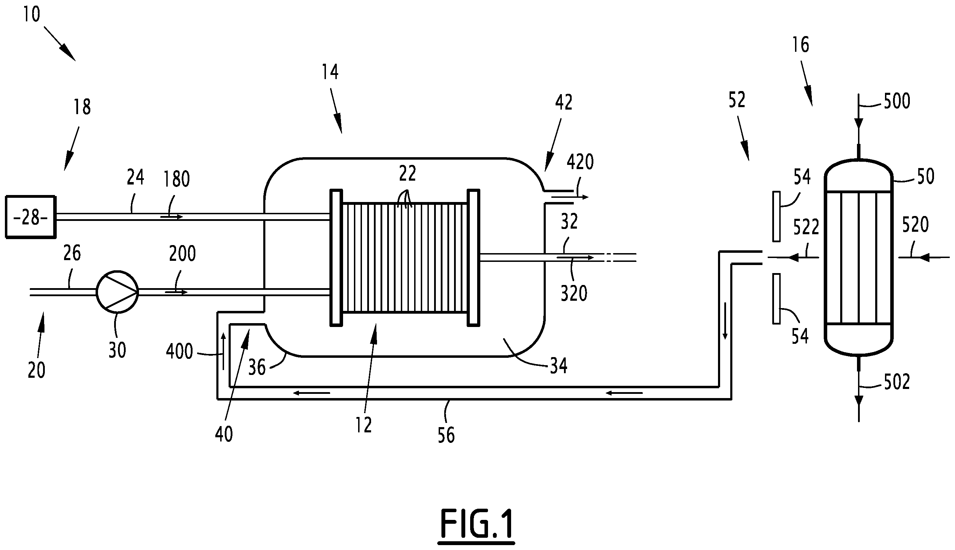

Figure 1 is a schematic view of a fuel cell system according to the invention.

A fuel cell system 10 according to the invention is shown schematically in Figure 1. For clarity purpose, only components involved in the invention are shown in Figure 1. The fuel cell system 10 is for example destined to equip a vehicle (not shown).

The vehicle is for example a railway vehicle, such as a metro, a tramway, a passenger train or a freight locomotive. As a variant, the vehicle is non-railborne and is for example, a bus or a car, or is a maritime vehicle.

The fuel cell system 10 is intended to provide electrical energy to at least an equipment of the vehicle, for example to an electric traction motor for propelling the vehicle.

The fuel cell system 10 comprises at least one fuel cell stack 12 adapted to produce electrical energy, an enclosure 14 and a thermal unit 16.

The fuel cell system 10 also classically comprises a hydrogen supply system 18, an air supply system 20, and a piping system.

The fuel cell stack 12 comprises a stack of a plurality of superimposed cells 22.

Each cell 22 is configured to generate electrical energy by carrying out a redox reaction between dihydrogen contained in a flow 180 of dihydrogen, also called inlet hydrogen flow 180, and oxygen contained in an inlet air flow 200.

Each cell 22 is, for example, a Polymer Electrolyte Fuel Cell (PEFC), in particular a PEMFC (Proton Exchange Membrane Fuel Cell).

In a known way, hydrogen and air are supplied to the fuel cell stack 12 from respectively the hydrogen supply system 18 and the air supply system 20, through supply lines 24, 26.

For example, the hydrogen supply system 18 comprises a hydrogen source 28, for example a reservoir adapted to contain hydrogen, and is configured to generate the inlet hydrogen flow 180.

For example, the air supply system 20 comprises an air compressor 30 configured to generate the inlet air flow 200 and send it into the fuel cell stack 12 from an air intake (not shown), which is for example connected to the exterior of the vehicle.

Electrical energy is generated in the fuel cell stack 12 by oxidation of the hydrogen. The reaction products are discharged, as fuel-cell exhaust gas 320, via an exhaust line 32.

The fuel cell stack 12 is arranged within an enclosure 14. The enclosure 14 defines an inner space 34 delimited by walls 36, in which the fuel cell stack 12 is accommodated.

In a known way, the fuel cell stack 12 comprises fluid inlet ports and fluid outlet ports (not shown) for the supply and exhaust lines 24, 26, 32.

For example, the enclosure 14 is made of a metallic material, for example is made of aluminum, aluminum alloy and/or stainless steel.

Dihydrogen coming from the fuel cell stack 12 may collect in the inner space 34 of the enclosure 14, due to leaks. Ventilation of the inner space 34 is thus required to prevent accumulation of dihydrogen within said space 34.

The enclosure 14 comprises at least a ventilation inlet 40 and a ventilation outlet 42 for the ventilation of the inner space 34.

The ventilation inlet 40 and the ventilation outlet 42 are for example openings arranged on walls 36 of the enclosure 14.

The ventilation inlet 40 and the ventilation outlet 42 are located on the enclosure 14 and emerge in the inner space 34 of the enclosure 14, so that a ventilation flow may circulate between the ventilation inlet 40 and the ventilation outlet 42.

Preferably, as shown on Figure 1, the ventilation inlet 40 and the ventilation outlet 42 are arranged on opposite walls 36 of the enclosure 14, on either side of the inner space 34, in order to maximize the distance between them. The airflow path between the ventilation inlet 40 and the ventilation outlet 42 is thus maximized, improving the ventilation of the inner space 34.

The ventilation inlet 40 is destined to allow air intake (symbolized by arrow 400) from the exterior of the inner space 34 and the ventilation outlet 42 is destined to allow discharge (symbolized by arrow 420) of a gas mixture from the inner space 34 to the exterior of the inner space 34. Said gas mixture comprises air and possible dihydrogen discharged from the fuel cell stack 12.

During operation of the fuel cell stack 12, heat is generated. The thermal circuit 16 is configured to cool the fuel cell stack 12 in order to maintain its operating temperature.

The thermal circuit 16 comprises a heat exchanger 50 adapted to cool the fuel cell stack 12 by cooling a coolant fluid circulating via a coolant pump (not shown) to the fuel cell stack 12. The circuit for the coolant fluid is not shown for clarity reasons.

The heat exchanger 50 is arranged outside the enclosure 14.

The heat exchanger 50 is an air-heat-transfer fluid exchanger, for example an air-water exchanger. For example, the heat exchanger 50 is a radiator comprising a tube bundle for circulating the heat-transfer fluid.

The thermal circuit 16 comprises a ventilation system 52 configured to create an airflow passing through the heat exchanger 50 and to evacuate heat from the heat-transfer fluid.

Preferably, as visible on figure 1, the ventilation system 52 comprises at least one fan 54 adapted for moving an airflow with respect to the heat exchanger 50.

Preferably, the or each fan 54 is arranged downstream of the heat exchanger 50.

The heat exchanger 50 is configured for receiving at least one stream 500 of heated heat-transfer fluid from the fuel cell stack 12, and a stream 520 of cooling air, and for producing a stream 502 of cooled heat-transfer fluid and a stream 522 of heated air.

Preferably, the stream 522 of heated air has a temperature lower than an operating temperature of the fuel cell stack. Advantageously, the stream 522 of heated air has a temperature comprised between 50°C and 95°C.

The ventilation system 52 is adapted to send at least a part of the stream 522 of heated air into the inner space 34 of the enclosure 14 through the ventilation inlet 40.

A piping system 56 (schematically shown on Figure 1) connects the ventilation system 52 to the ventilation inlet 40.

The operation of the fuel cell system 10 stems from its structure and will now be briefly described as an example of process according to the invention.

As shown in Figure 1, the fuel cell stack 12 receives hydrogen and air from respectively the hydrogen supply system 18 and the air supply system 20, through respective supply lines 24, 26.

Power is produced by the fuel cell stack 12 and consumed for example by an equipment of the vehicle and residual water produced by the reaction goes to the reservoir.

During operation, hydrogen is released by the fuel cell stack 12 into the enclosure 14, due to natural hydrogen permeation of the components of the fuel cell stack 12 and/or component failure.

Heat is also generated by the fuel cell stack 12.

A stream 502 of cooled heat-transfer fluid, coming from the heat exchanger 50, takes that heat and becomes the stream 500 of heated heat-transfer fluid.

The stream 500 of heated heat-transfer fluid is received and cooled in the heat exchanger 50 thanks to an airflow, circulating for example around tube bundle of the heat exchanger 50. The stream 500 of heated heat-transfer is cooled against a stream 520 of cooling air, and becomes the stream of cooled heat-transfer fluid 502. The stream 520 of cooling air is heated in the heat exchanger 50 and becomes the stream 522 of heated air.

The airflow passing through the heat exchanger 50, which comprises the stream 520 of cooling air and the stream 522 of heated air, is moved by the ventilation system 52.

At least part of said airflow, notably part of the stream 522 of the heated air, is sent into the inner space 34 of the enclosure 14 through the ventilation inlet 40, while a flow comprising air and hydrogen emerges from said inner space 34 through the ventilation outlet 42.

Advantageously, the airflow is sent into the inner space 34 at a rate so that a concentration of H₂ into said inner space 34 is maintained to a volume concentration of less than a lower flammability limit of dihydrogen, preferably to a volume concentration of less than 1%.

The system 10 according to the invention thus takes advantage of the ventilation system 52 of the thermal circuit 16 and uses the airflow used to cool the heat-transfer fluid to ventilate the enclosure 14 in which the fuel cell stack 12 is arranged. No additional system for ventilating the inner space 34 of the enclosure 14 is thus required. Furthermore, it is not necessary to divert a part or the air flow generated by the air compressor to provide oxygen to the fuel cell stack 12 into the enclosure 14. The overall efficiency of the fuel cell system 10 is thus improved.

## Claims

1. A fuel cell system (10), comprising:
- at least one fuel cell stack (12) adapted to produce electrical energy from at least one flow (180) of dihydrogen and a flow (200) of air, the or each fuel cell stack (12) comprising a plurality of cells (22);
- an enclosure (14) defining an inner space (34), in which the or each fuel cell stack (12) is arranged, the enclosure (14) comprising at least a ventilation inlet (40) and a ventilation outlet (42) for the ventilation of the inner space (34);
- a thermal circuit (16) comprising a heat exchanger (50) adapted to cool the or each fuel cell stack (12) and comprising at least a ventilation system (52) configured to create an airflow through the heat exchanger (50),
wherein the ventilation system (52) is adapted to send at least part of said airflow into the inner space (34) through the ventilation inlet (40).

2. The fuel cell system (10) according to claim 1, wherein the or each cell (22) is an ion polymer electrolyte fuel cell, preferably a proton exchange membrane fuel cell.

3. The fuel cell system (10) according to claim 1 or 2, wherein the enclosure (14) is made of a metallic material, preferably of aluminum, aluminum alloy and/or stainless steel.

4. The fuel cell system (10) according to any of the preceding claims, wherein the ventilation system (52) is configured to send at least part of the airflow into the inner space (34) through the ventilation inlet (40) at a rate so that a volume concentration of H₂ into said inner space (34) is maintained to less than a lower flammability limit of dihydrogen.

5. The fuel cell system (10) according to any of the preceding claims, wherein the ventilation inlet (40) and the ventilation outlet (42) are arranged on walls (36) of the enclosure (14) on either side of the inner space (34).

6. The fuel cell system (10) according to any of the preceding claims, wherein the heat exchanger (50) is a radiator comprising a tube bundle for circulating a heat transfer fluid.

7. The fuel cell system (10) according to any of the preceding claims, further comprising an air compressor (30) configured to inject the flow (200) of air into the fuel cell stack (12).

8. A vehicle, for example a railway vehicle, comprising a fuel cell system (10) according to any of the preceding claims, the fuel cell system (10) being configured to provide electrical energy to at least an equipment of the vehicle.

9. The vehicle according to claim 8, wherein the vehicle comprises at least one electric traction motor for propelling the vehicle, the fuel cell system (10) being configured to provide electrical energy to said motor.
